# EUROPEAN PATENT APPLICATION

(11) **EP 4 358 283 A1**
(43) Date of publication of application: **24.04.2024**
(21) Application number: 22907903.3
(22) Date of filing: 13.12.2022
(51) Int. Cl.: H01M 50/593, H01M 50/586, H01M 50/186, H01M 50/167, H01M 10/04

(54) **CAP ASSEMBLY, CYLINDRICAL SECONDARY BATTERY INCLUDING SAME, AND METHOD FOR MANUFACTURING CYLINDRICAL SECONDARY BATTERY INCLUDING SAME**

(30) Priority: 13.12.2021 KR 20210177354
(71) Applicant: LG Energy Solution, Ltd., Seoul 07335 (KR)
(72) Inventor: HAN, In Kee, Daejeon 34122 (KR); KIM, Eun Young, Daejeon 34122 (KR); BOK, Cheon Hee, Daejeon 34122 (KR); SUNG, Joo Hwan, Daejeon 34122 (KR); LEE, Jangho, Daejeon 34122 (KR); LEE, Joonghoon, Daejeon 34122 (KR)
(74) Representative: Goddar, Heinz J.
(86) International application number: PCT/KR2022/020260
(87) International publication number: WO 2023/113436

(57) **Abstract**

The present application relates to a cap assembly, a cylindrical secondary battery including the same, and a method of manufacturing a cylindrical secondary battery including the same.

## Description

### [Technical Field]

This application claims priority to and the benefit of Korean Patent Application No. 10-2021-0177354 filed with the Korean Intellectual Property Office on December 13, 2021, the entire contents of which are incorporated herein by reference.

The present invention relates to a cap assembly, a cylindrical secondary battery including the same, and a method of manufacturing a cylindrical secondary battery including the same.

### [Background Art]

Depending on shapes of battery casings, lithium secondary batteries are classified into a cylindrical or angular secondary battery in which an electrode assembly is embedded in a cylindrical or angular metal can, and a pouch-type secondary battery in which an electrode assembly is embedded in a pouch-type casing provided in the form of a laminated aluminum sheet. Among these batteries, the cylindrical secondary battery advantageously has a relatively large capacity and is structurally stable.

A cap assembly is positioned at and seals an opened upper end of a cylindrical casing of the cylindrical secondary battery and isolates the interior of the cylindrical secondary battery from the outside. A gasket, which constitutes the cap assembly, also serves to ensure insulation between a top cap connected to a positive electrode tab of an electrode assembly and the cylindrical casing connected to a negative electrode tab.

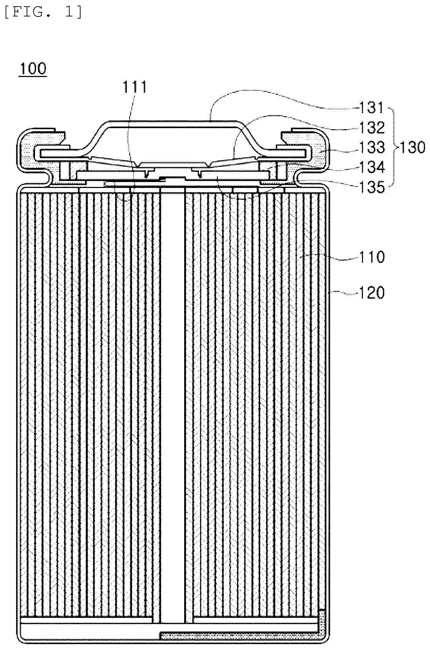

FIG. 1 is a vertical cross-sectional view of a general cylindrical secondary battery. Referring to FIG. 1, an electrode assembly 110 is accommodated in a cylindrical can 120, a cap assembly 130 is positioned at an upper side of a cylindrical secondary battery 100, and the cylindrical secondary battery 100 is sealed by a crimping gasket 133.

The cap assembly 130 includes a safety vent 132 positioned below a top cap 131 while surrounding an outer periphery of the top cap 131, and an electric current blocking member 135 positioned below the safety vent 132 while being in contact with a central portion of the safety vent 132. A lower gasket 134 is positioned at an outer periphery of the electric current blocking member 135 and prevents the safety vent 132 and the electric current blocking member 135 from coming into contact with a portion other than the central portion.

A positive electrode tab 111 of the electrode assembly 110 is attached to a lower surface of the electric current blocking member 135, such that the top cap 131 serves as a positive electrode terminal.

Welding is performed during a process of coupling the cap assembly and the cylindrical can of the cylindrical secondary battery. There occurs a problem in that a separator of the electrode assembly is melted by heat and pressure generated in the welding process. In addition, there is also a problem in that the electrode is damaged during the welding process.

The above-mentioned problems cause deterioration in performance of the battery and reduce a lifespan. Accordingly, there is a need for a method capable of solving the problem.

### <Document of Related Art>

JP WO2013-145768 A1

### [Detailed Description of the Invention]

### [Technical Problem]

The present invention relates to a cap assembly, a cylindrical secondary battery including the same, and a method of manufacturing a cylindrical secondary battery including the same.

### [Technical Solution]

The present invention provides a cap assembly couplable to an upper side of a cylindrical can configured to accommodate an electrode assembly and an electrolyte therein, the cap assembly including: a polymer gasket located between a portion of the cap assembly and the electrode assembly and corresponding to a region in which the cap assembly and the cylindrical can are coupled, in which the polymer gasket includes a polymer material having a melting point of 250°C or more.

The present invention provides a cylindrical secondary battery including: an electrode assembly made by winding a positive electrode and a negative electrode between which a separator is disposed; a cylindrical can configured to accommodate the electrode assembly and an electrolyte; a cap assembly coupled to an opened upper side of the cylindrical can; and an insulation plate positioned at an upper side of the electrode assembly, in which the cap assembly is the above-mentioned cap assembly according to the present application.

The present invention provides a method of manufacturing a cylindrical secondary battery, the method including: accommodating an electrode assembly, which is made by winding a positive electrode and a negative electrode between which a separator is disposed, into a cylindrical can; positioning an insulation plate at an upper side of the electrode assembly; forming a beading portion; and coupling a cap assembly and the cylindrical can, in which the cap assembly is the above-mentioned cap assembly according to the present application.

### [Advantageous Effects]

The use of the cap assembly according to the present invention may reduce the problem in that the separator of the electrode assembly may be melted and the electrode may be damaged during the process of manufacturing the cylindrical battery. Therefore, it is possible to manufacture the cylindrical battery excellent in performance and lifespan.

More specifically, a material with high heat resistance is used as a material of the gasket, which makes it possible to reduce a risk of melting of the separator in a region (junction portion) being in contact with the separator.

More specifically, a material with high heat resistance is used as a material of the gasket, which makes it possible to prevent damage to the electrode during a welding process.

The secondary battery according to the embodiment of the present invention is excellent in performance and lifespan.

### [Brief Description of Drawings]

FIG. 1 is a vertical cross-sectional view of a general cylindrical secondary battery in the related art.
FIGS. 2 and 3 are vertical cross-sectional views of a cylindrical secondary battery according to an embodiment of the present invention.
FIGS. 4 and 5 are views schematically illustrating a structure in the related art and a structure of the present invention.

### [Explanation of Reference Numerals and Symbols]

11: First electrode
12: Second electrode
13: Separator
100, 200, 300: Cylindrical secondary battery
110, 210, 310: Electrode assembly
111, 211, 311: Positive electrode tab
15, 120, 220, 320: Cylindrical can
14, 130, 230, 330: Cap assembly
131, 231, 331: Top cap
132, 232, 332: Safety vent
133, 233, 333: Crimping gasket
134, 234: Lower gasket
135, 235: Electric current blocking member
16, 236, 336: Polymer gasket
344: Groove portion
350: Insulation plate
351: Protruding portion

### [Best Mode]

Hereinafter, the present invention will be described in detail so that those with ordinary skill in the art to which the present invention pertains may easily carry out the present invention. However, the present invention may be implemented in various different ways and is not limited to the embodiments described herein.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, the term "polymer gasket" means a gasket that includes a polymer material having a melting point of 250°C or more and corresponds to a region in which a cap assembly and a cylindrical can are coupled, the gasket being disposed between the cap assembly and the electrode assembly and different from a gasket disposed at another position.

Further, in the description of the present invention, the specific descriptions of well-known related technologies will be omitted when it is determined that the specific descriptions may unnecessarily obscure the subject matter of the present invention.

An embodiment of the present invention provides a cap assembly coupled to an upper side of a cylindrical can configured to accommodate an electrode assembly and an electrolyte, the cap assembly including: a polymer gasket disposed between the cap assembly and the electrode assembly and corresponding to a region in which the cap assembly and the cylindrical can are coupled, in which the polymer gasket includes a polymer material having a melting point of 250°C or more.

In the embodiment of the present invention, the polymer gasket may include a polymer material having a melting point of 250°C or more.

In the embodiment of the present invention, the polymer gasket may be a polymer material having a melting point of 250°C or more. That is, the polymer gasket may be made of a polymer material having a melting point of 250°C or more.

In this case, the electrode assembly may be made by circularly winding a positive electrode sheet and a negative electrode sheet between which a separator is interposed. The electrode assembly is called a jelly-roll (J/R) electrode assembly.

Because the polymer gasket is disposed between the cap assembly and the electrode assembly while corresponding to the region in which the cap assembly and the cylindrical can are coupled, the separator is prevented from being melted and the electrode is prevented from being damaged during the process of coupling the cap assembly and the cylindrical can by welding, thereby improving performance and lifespan of the battery.

In the embodiment of the present invention, the melting point of the polymer material may be 250°C or more, particularly 300°C or more. The melting point condition needs to be satisfied to prevent melting of the separator and damage to the electrode during the process of coupling the cap assembly and the cylindrical can by welding.

In the embodiment of the present invention, the polymer material may include one or more selected from a group consisting of perfluoroalkoxy alkane (PFA), polytetrafluoroethylene (PTFE), and polyethylene terephthalate (PET). That is, the polymer material may include two or more selected from the group. However, the present invention is not limited thereto. It is possible to use any polymer that satisfies the melting point condition without affecting performance of the battery.

In the cap assembly according to the embodiment of the present invention, the region in which the cap assembly and the cylindrical can are coupled may mean an outer periphery of the upper side of the cylindrical can.

In the embodiment of the present invention, the cap assembly may further include: a top cap; a safety vent arranged to be in close contact with the top cap while surrounding an outer periphery of the top cap; and a crimping gasket configured to couple the cap assembly to the cylindrical can and crimp the cap assembly.

In the embodiment of the present invention, the cap assembly may further include: a top cap; a safety vent arranged to be in close contact with the top cap while surrounding an outer periphery of the top cap; and a gasket configured to surround the outer periphery of the top cap and an outer periphery of the safety vent.

In the embodiment of the present invention, the cap assembly may further include: a top cap; a safety vent arranged to be in close contact with the top cap while surrounding an outer periphery of the top cap; a gasket configured to surround the outer periphery of the top cap and an outer periphery of the safety vent; and an electric current blocking member.

In the embodiment of the present invention, the top cap may have a central portion protruding upward.

In the embodiment of the present invention, the safety vent may have a central portion protruding downward.

In the embodiment of the present invention, the electrode assembly may include a positive electrode tab. The positive electrode tab may be connected to the top cap.

In the embodiment of the present invention, the electrode assembly may include a negative electrode tab. Like a can to be described below, the negative electrode tab may be connected to a casing capable of accommodating the electrode assembly.

In the embodiment of the present invention, the gasket, which surrounds the outer periphery of the top cap and the outer periphery of the safety vent, may be a crimping gasket or a lower gasket. The crimping gasket serves to seal the cylindrical secondary battery. The lower gasket serves to prevent the safety vent and the electric current blocking member from coming into contact with a portion other than the central portion.

Specifically, in the embodiment of the present invention, the polymer gasket disposed between the cap assembly and the electrode assembly may be disposed at a lower end of the crimping gasket.

In the embodiment of the present invention, the polymer gasket disposed between the cap assembly and the electrode assembly may be disposed at the lower end of the crimping gasket and have a groove portion.

An embodiment of the present invention provides a cylindrical secondary battery including: an electrode assembly made by winding a positive electrode and a negative electrode between which a separator is disposed; a cylindrical can configured to accommodate the electrode assembly and an electrolyte; a cap assembly coupled to an opened upper side of the cylindrical can; and an insulation plate positioned at an upper side of the electrode assembly, in which the cap assembly is the above-mentioned cap assembly according to the present application.

In other words, the embodiment of the present invention may provide the cylindrical secondary battery including: the electrode assembly made by winding the positive electrode and the negative electrode between which the separator is disposed; the cylindrical can configured to accommodate the electrode assembly and the electrolyte; the cap assembly according to the present application coupled to the opened upper side of the cylindrical can; and the insulation plate positioned at the upper side of the electrode assembly, in which the cylindrical secondary battery includes the polymer gasket disposed between the cap assembly and the electrode assembly and corresponding to the region in which the cap assembly and the cylindrical can are coupled. In this case, the description of the above-mentioned contents may be applied to describe the polymer gasket included in the cylindrical secondary battery.

That is, the cylindrical secondary battery according to the present invention may include: the electrode assembly made by winding the positive electrode and the negative electrode between which the separator is disposed; the cylindrical can configured to accommodate the electrode assembly and the electrolyte; the cap assembly coupled to the opened upper side of the cylindrical can; and the insulation plate positioned at the upper side of the electrode assembly.

In addition, as described above, the cap assembly according to the present invention may further include: the top cap; the safety vent arranged to be in close contact with the top cap while surrounding the outer periphery of the top cap; the gasket configured to surround the outer periphery of the top cap and the outer periphery of the safety vent; and the electric current blocking member. In addition, as described above, the gasket, which surrounds the outer periphery of the top cap and the outer periphery of the safety vent, may be the crimping gasket or the lower gasket.

The cylindrical secondary battery according to the embodiment of the present invention may be sealed by the crimping gasket.

As described above, in the embodiment of the present invention, the electrode assembly may include the positive electrode tab and the negative electrode tab. In this case, the positive electrode tab may be connected to the top cap, and the negative electrode tab may be connected to the cylindrical can.

In the embodiment of the present invention, the polymer gasket, which is disposed between the cap assembly and the electrode assembly and corresponds to the region in which the cap assembly and the cylindrical can are coupled, may be disposed at the lower end of the crimping gasket and disposed between the crimping gasket and the insulation plate.

In the secondary battery according to the embodiment of the present invention, the region in which the cap assembly and the cylindrical can are coupled may mean the outer periphery of the upper side of the cylindrical can.

An embodiment of the present invention provides a method of manufacturing a cylindrical secondary battery, the method including: accommodating an electrode assembly, which is made by winding a positive electrode and a negative electrode between which a separator is disposed, into a cylindrical can; positioning an insulation plate at an upper side of the electrode assembly; forming a beading portion; and coupling a cap assembly and the cylindrical can, in which the cap assembly is the above-mentioned cap assembly according to the present application.

In other words, the embodiment of the present invention may provide the method of manufacturing the cylindrical secondary battery, the method including: accommodating the electrode assembly, which is made by winding the positive electrode and the negative electrode between which the separator is disposed, into the cylindrical can; positioning the insulation plate at the upper side of the electrode assembly; forming the beading portion; and coupling the cap assembly according to the present application and the cylindrical can, in which the cap assembly includes a polymer gasket disposed between the cap assembly and the electrode assembly and corresponding to the region in which the cap assembly and the cylindrical can are coupled, and in which the polymer gasket includes a polymer material having a melting point of 250°C or more.

In this case, as described above, in the embodiment of the present invention, the polymer gasket may be a polymer material having a melting point of 250°C or more. That is, the polymer gasket may be made of a polymer material having a melting point of 250°C or more.

In the embodiment of the present invention, the coupling of the cap assembly and the cylindrical can may include: coupling a positive electrode tab of the electrode assembly to a lower surface of a safety vent that constitutes the cap assembly; and coupling the cap assembly to the cylindrical can and crimping the cap assembly. The crimping of the cap assembly may use a crimping gasket.

Even in the method of manufacturing the cylindrical secondary battery, the polymer gasket, which is disposed between the cap assembly and the electrode assembly and corresponds to the region in which the cap assembly and the cylindrical can are coupled, may be disposed at the lower end of the crimping gasket and disposed between the crimping gasket and the insulation plate.

In the method of manufacturing the cylindrical secondary battery according to the embodiment of the present invention, the region in which the cap assembly and the cylindrical can are coupled may mean the outer periphery of the upper side of the cylindrical can.

In the present specification, the "coupling" may be implemented by welding, and a typical method such as seam welding, which is used in the corresponding field, may be used.

Hereinafter, embodiments of the present invention will be described in detail with reference to the accompanying drawings so that those with ordinary skill in the art to which the present invention pertains may easily carry out the present invention. However, in the detailed description of operational principles in the exemplary embodiments of the present invention, the specific descriptions of well-known functions or configurations related to the present invention will be omitted when it is determined that the specific descriptions may unnecessarily obscure the subject matter of the present invention.

In addition, throughout the drawings, the same reference numerals are used for the constituent elements that perform similar functions and operations. Throughout the present specification, when one constituent element is referred to as being "connected to" another constituent element, one constituent element can be "directly connected to" the other constituent element, and one constituent element can also be "indirectly connected to" the other element with other elements therebetween. In addition, unless explicitly described to the contrary, the word "comprise/include" and variations such as "comprises/includes" or "comprising/including" will be understood to imply the inclusion of stated elements, not the exclusion of any other elements.

### [Mode for Invention]

The present invention will be described with respect to detailed embodiments and drawings.

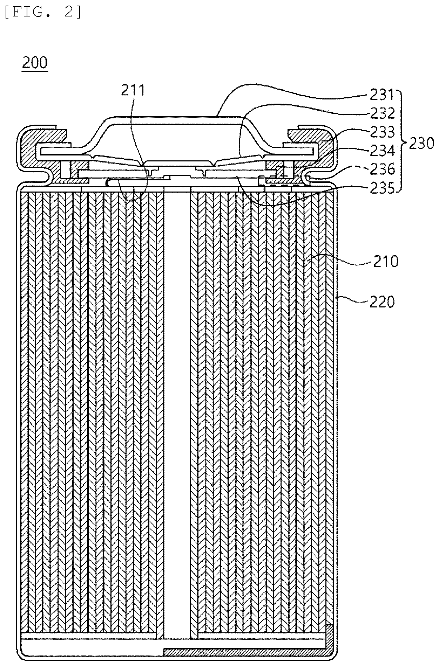

FIG. 2 is a vertical cross-sectional view of a cylindrical secondary battery according to an embodiment.

Referring to FIG. 2, an electrode assembly 210 is accommodated in a cylindrical can 220, a cap assembly 230 is positioned at an upper side of a cylindrical secondary battery 200, and the cylindrical secondary battery 200 is sealed by a crimping gasket 233.

That is, the cap assembly 230 includes: a top cap 231 having a structure having a central portion protruding upward; a safety vent 232 configured to surround an outer periphery of the top cap and having a shape concave downward, the safety vent 232 being disposed below the top cap; and an electric current blocking member 235 positioned below the safety vent 232 while being in contact with a central portion of the safety vent 232. In addition, the cap assembly 230 may include: a lower gasket 234 disposed at an outer periphery of the electric current blocking member 235 and configured to prevent the safety vent 232 and the electric current blocking member 235 from coming into contact with a portion other than the central portion; and the crimping gasket 233 configured to seal the secondary battery while being in close contact with a cylindrical can.

In the present invention, as illustrated in FIG. 2, a polymer gasket 236 is disposed in a region S in which the cap assembly 230 and the cylindrical can are coupled. That is, the polymer gasket 236 is disposed between the crimping gasket 233 and an insulation plate 250 of the electrode assembly 210 and made of a polymer material having a melting point of 250°C or more.

In the embodiment of the present invention, the polymer gasket may be attached to a lower surface of the cap assembly. That is, the polymer gasket 236 may be attached to the lower surface of the cap assembly 230 along an outer periphery of an upper side of the cylindrical can. More specifically, the polymer gasket may be attached to a lower end of the crimping gasket 233 of the cap assembly.

In the embodiment of the present invention, the insulation plate may include an opening. The opening may be positioned at a center of the insulation plate.

In general, a positive electrode tab extends upward while passing through the opening of the insulation plate and is coupled to the lower surface of the safety vent by welding. Therefore, the positive electrode tab of the present invention may be disposed to be in contact with the lower surface of the gasket at two opposite sides based on a portion where the positive electrode tab is coupled to the lower surface of the safety vent.

In the embodiment of the present invention, the insulation plate may have a protruding portion. The polymer gasket may have a groove portion. The groove portion of the polymer gasket and the protruding portion of the insulation plate may engage with each other. In this case, the cap assembly does not include the electric current blocking member and the lower gasket provided at the outer periphery of the electric current blocking member, and the polymer gasket has the groove portion corresponding to the groove portion.

Because the groove portion is formed in the polymer gasket even though the cap assembly does not include the electric current blocking member and the lower gasket provided at the outer periphery of the electric current blocking member, the safety vent may be separated and disconnected from the positive electrode tab when the safety vent is deformed into an inverted shape because of an increase in internal pressure of the cylindrical secondary battery.

That is, in case that the structure in which the groove portion of the polymer gasket and the protruding portion of the insulation plate engage with each other is provided, the positive electrode tab is coupled directly to the lower surface of the safety vent. In addition, in case that the structure in which the groove portion of the polymer gasket and the protruding portion of the insulation plate engage with each other is provided, the positive electrode tab is interposed in the structure in which the groove portion of the polymer gasket and the protruding portion of the insulation plate engage with each other, such that the position of the positive electrode tab may be fixed. Further, the position of the positive electrode tab may be additionally fixed as the positive electrode tab is bonded to the lower surface of the polymer gasket.

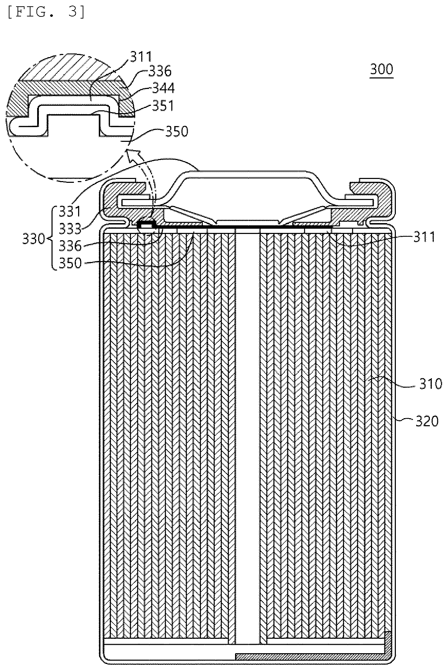

FIG. 3 is a vertical cross-sectional view of a cylindrical secondary battery according to another embodiment.

As illustrated in FIG. 3, an electrode assembly 310 is accommodated in a cylindrical can 320, a cap assembly 330 is positioned at an upper side of a cylindrical secondary battery 300, and the cylindrical secondary battery 300 is sealed by a crimping gasket 333 having a groove portion. As illustrated in FIG. 3, the cap assembly 330 does not include the electric current blocking member and the lower gasket provided at the outer periphery of the electric current blocking member.

In this case, in the present invention, as illustrated in FIG. 3, a polymer gasket is disposed in a region S in which the cap assembly 330 and the cylindrical can are coupled. That is, the polymer gasket is disposed between the crimping gasket 333 and an insulation plate 350 having a protruding portion 351 of the electrode assembly 310 and including a polymer material having a melting point of 250°C or more. The polymer gasket may have a groove portion 344, thereby implementing the engagement structure.

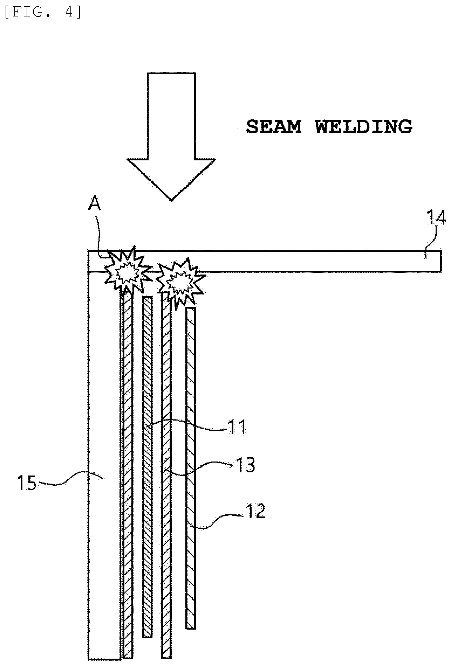

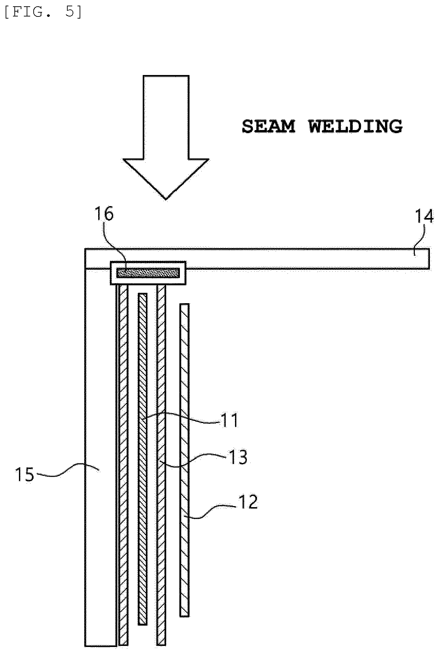

In the present specification, the features of the present invention will be described in detail with reference to the comparison between FIGS. 4 and 5. In this case, FIG. 4 is a view illustrating a structure in the related art, and FIG. 5 is a view schematically illustrating a structure of the present invention. More specifically, in the case of the structure in the related art, as illustrated in FIG. 4, during a process of inserting a jelly-roll (J/R) electrode assembly into a cylindrical can 15 and coupling the cylindrical can 15 and a cap assembly 14 by seam welding, a first electrode 11, a second electrode 12, and a separator 13, which are positioned at a position, at which the cylindrical can 15 and the cap assembly 14 are coupled, i.e., at a position adjacent to the welded portion, are often damaged (position A). Specifically, the separator 13 may be melted, or the first and second electrodes 11 and 12 may be deformed.

In contrast, as illustrated in FIG. 5, in the structure of the present invention, a polymer gasket 16 is positioned on the first electrode 11, the second electrode 12, and the separator 13 positioned adjacent to the welded portion. Therefore, it is possible to prevent a problem in that the separator 13 is melted or the first and second electrodes 11 and 12 are deformed during the process of inserting the jelly-roll (J/R) electrode assembly into the cylindrical can 15 and coupling the cylindrical can 15 and the cap assembly 14 by seam welding. For reference, FIGS. 4 and 5 illustrate only a part of the electrode assembly.

In the embodiment of the present invention, the first electrode may be a positive electrode, and the second electrode may be a negative electrode. On the contrary, in the embodiment of the present invention, the first electrode may be a negative electrode, and the second electrode may be a positive electrode.

While the embodiments of the present invention have been described above, the scope of the present invention is not limited to, and it will be obvious to those skilled in the art to which the present invention pertains that various modifications and alterations may be made without departing from the technical spirit of the present invention.

## Claims

1. A cap assembly couplable to an upper side of a cylindrical can configured to accommodate an electrode assembly and an electrolyte therein, the cap assembly comprising:
a polymer gasket locatable between a portion the cap assembly and the electrode assembly and corresponding to a region in which the cap assembly and the cylindrical can are coupled,
wherein the polymer gasket includes a polymer material having a melting point of 250°C or more.

2. The cap assembly of claim 1, wherein the polymer material includes one or more selected from a group consisting of perfluoroalkoxy alkane (PFA), polytetrafluoroethylene (PTFE), and polyethylene terephthalate (PET).

3. The cap assembly of claim 1, wherein the region in which the cap assembly and the cylindrical can are coupled is at an outer periphery of the upper side of the cylindrical can.

4. The cap assembly of claim 1, wherein the cap assembly further comprises:
a top cap;
a safety vent arranged to be in close contact with the top cap while surrounding an outer periphery of the top cap; and
a crimping gasket configured to couple the cap assembly to the cylindrical can and crimp the cap assembly.

5. The cap assembly of claim 4, wherein the polymer gasket, which is disposed between the cap assembly and the electrode assembly and corresponds to the region in which the cap assembly and the cylindrical can are coupled, is disposed at a lower end of the crimping gasket.

6. The cap assembly of claim 5, wherein the polymer gasket, which is disposed between the cap assembly and the electrode assembly and corresponds to the region in which the cap assembly and the cylindrical can are coupled, has a groove portion.

7. A cylindrical secondary battery comprising:
an electrode assembly made by winding a positive electrode and a negative electrode between which a separator is disposed;
a cylindrical can configured to accommodate the electrode assembly and an electrolyte;
a cap assembly coupled to an opened upper side of the cylindrical can; and
an insulation plate positioned at an upper side of the electrode assembly,
wherein the cap assembly is the cap assembly according to any one of claims 1 to 6.

8. The cylindrical secondary battery of claim 7, wherein the region in which the cap assembly and the cylindrical can are coupled is an outer periphery of the upper side of the cylindrical can.

9. A method of manufacturing a cylindrical secondary battery, the method comprising:
accommodating an electrode assembly, which is made by winding a positive electrode and a negative electrode between which a separator is disposed, into a cylindrical can;
positioning an insulation plate at an upper side of the electrode assembly;
forming a beading portion; and
coupling a cap assembly and the cylindrical can,
wherein the cap assembly is the cap assembly according to any one of claims 1 to 6.

10. The method of claim 9, wherein the region in which the cap assembly and the cylindrical can are coupled is an outer periphery of an upper side of the cylindrical can.
